(19) Europäisches Patentamt
European Patent Office
Office européen des brevets

(11) **EP 4 226 061 B1**

(12) **EUROPÄISCHE PATENTSCHRIFT**

(45) Veröffentlichungstag und Bekanntmachung des Hinweises auf die Patenterteilung:
**30.04.2025 Patentblatt 2025/18**

(21) Anmeldenummer: **21790366.5**

(22) Anmeldetag: **29.09.2021**

(51) Internationale Patentklassifikation (IPC):
*F16C 33/78* ^(2006.01)     *F16J 15/3264* ^(2016.01)
*F16J 15/34* ^(2006.01)

(52) Gemeinsame Patentklassifikation (CPC):
**F16C 33/7823; F16J 15/3264; F16J 15/3456;**
F16C 19/186; F16C 33/6618; F16C 33/7879;
F16C 33/7883; F16C 33/805; F16C 43/045;
F16C 2240/12; F16C 2240/30; F16C 2240/46;
F16C 2240/60; F16C 2326/02

(86) Internationale Anmeldenummer:
**PCT/DE2021/100786**

(87) Internationale Veröffentlichungsnummer:
**WO 2022/073548 (14.04.2022 Gazette 2022/15)**

(54) **DICHTUNGSANORDNUNG FÜR RADLAGER UND RADLAGEREINHEIT MIT DICHTUNGSANORDNUNG**

SEALING ARRANGEMENT FOR WHEEL BEARINGS, AND WHEEL BEARING UNIT COMPRISING A SEALING ARRANGEMENT

AGENCEMENT D'ÉTANCHÉITÉ POUR ROULEMENTS DE ROUE ET ENSEMBLE ROULEMENT DE ROUE DOTÉ D'AGENCEMENT D'ÉTANCHÉITÉ

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **06.10.2020 DE 102020126119**

(43) Veröffentlichungstag der Anmeldung:
**16.08.2023 Patentblatt 2023/33**

(73) Patentinhaber: **Schaeffler Technologies AG & Co. KG**
**91074 Herzogenaurach (DE)**

(72) Erfinder:
• **KATANA, Branko**
**97456 Dittelbrunn (DE)**
• **KRAPF, Marco**
**97705 Burkardroth (DE)**

(56) Entgegenhaltungen:
EP-A1- 3 653 912     DE-T5- 112010 000 730
JP-A- 2007 211 791     US-A1- 2020 277 993

**Beschreibung**

Die vorliegende Erfindung betrifft eine Dichtungsanordnung für ein Radlager, eine Verwendung einer solchen Dichtungsanordnung zur Dichtung eines Radlagers sowie eine Radlagereinheit mit einer solchen Dichtungsanordnung.

Stand der Technik

Dichtungen für Lager, wie bspw. Wälzlager, Gleitlager etc., sind hinlänglich bekannt. Sie sollen das Eindringen von Schmutz in das Lager und ggf. das Ausdringen von Schmiermittel aus dem Lager verhindern, um eine möglichst lange Lebensdauer des Lagers zu gewährleisten.

Bei Radlagern mit Wälzkörpern muss durch eine beidseitige, gleitende Abdichtung des die Laufbahnen und Wälzkörper aufnehmenden, mit Schmiermittel befüllten Raumes dafür gesorgt werden, dass weder Festkörperpartikel noch Korrosion erzeugende Medien in diesen Raum eindringen können. Da es im Fahrbetrieb, bspw. bei Querbeschleunigungen, zu geringfügigen Verkippungen innerhalb der Lagerung kommen kann, besteht das Risiko, dass bekannte Dichtungen, insbesondere sogenannte Lippendichtungen, von Gleitflächen abheben, wodurch Festkörperpartikel, bspw. Schmutz oder Staub, in das Lager eindringen können. Die bekannten Dichtungen können zusätzlich mit einem sogenannten Schleuderblech, das aus umgeformtem Blech hergestellt ist, zusammenwirken. Das Schleuderblech ist üblicherweise mit einer rotierenden Radnabe bzw. einem rotierenden Radlagerflansch verbunden und kann zusammen mit einem weiteren, in einem stationären Teil der Radaufhängung angeordneten Blechring ein zusätzliches Dichtungslabyrinth ausbilden. Die Dichtlippen zumindest eines Dichtringes erstrecken sich in axialer oder radialer Richtung und sind gleitend an dem Schleuderblech geführt. Die vorgenannten Bauteile der Abdichtung können auch integraler Bestandteil einer Dichtungskassette sein, bei der die Dichtlippen definiert axial vorgespannt sind.

Am Radlager befinden sich in axialer Richtung beidseitig eine hauptsächlich axial gerichtete Öffnung, die zwischen den beiden beteiligten Drehpartnern, die durch das Radlager miteinander gekoppelt sind. Die in axialer Richtung fahrzeugseitige Öffnung ist im Wesentlichen axial gerichtet und wird gelegentlich von einer Gelenkglocke eines angrenzenden Gleichlaufdrehgelenkes abgedeckt. Die in axialer Richtung radflanschseitige Öffnung ist, bedingt durch den unmittelbar benachbarten Radlagerflansch radial nach außen gerichtet und so für bspw. Spritzwasser sehr leicht zu erreichen. Um den am Radlagerflansch vorhandenen schleifenden Dichtkontakt zu verbessern, wird das Schleuderblech aus umgeformten Blech am Radlagerflansch vor dem Einbau des Radlagers auf der Radnabe angrenzend zum Radlagerflansch eingesetzt.

DE 11 2010 000730 T5 zeigt eine gattungsgemäße Dichtungsanordnung.

Im Betrieb des Fahrzeugs kann durch eine Erschütterung, fortwährende Vibrationsbelastungen oder andere Ursachen ein Verrutschen des Schleuderblechs verursacht werden, wodurch sich das Schleuderblech in Richtung der Wälzköper bewegt und diese bei einer Berührung beschädigt, was zu einem Ausfall des Radlagers führt.

Es ist eine Aufgabe der vorliegenden Erfindung, eine verbesserte Dichtungsanordnung für ein Radlager bereitzustellen, die insbesondere über die Gebrauchsdauer sicher abdichtet und eine längere Lebensdauer aufweist.

Offenbarung der Erfindung

Die Aufgabe wird durch eine Dichtungsanordnung für ein Radlager nach den unabhängigen Ansprüchen gelöst. Vorteilhafte Ausführungsformen und Weiterbildungen sind den Unteransprüchen und der nachfolgenden Beschreibung zu entnehmen.

Die erfindungsgemäße Dichtungsanordnung für ein Radlager weist ein Trägerelement, ein elastisches Dichtungselement und ein Gegenlaufblech auf. Das Trägerelement ist mit einem ersten Lagerteil des Radlagers verbindbar. Das elastische Dichtungselement weist einen elastischen Hauptkörper auf, der an dem Trägerelement angeordnet ist. Ferner weist das elastische Dichtungselement zumindest eine erste axiale Dichtlippe, eine zweite axiale Dichtlippe sowie zumindest eine radiale Dichtlippe auf, die sich von dem elastischen Hauptkörper weg erstrecken. Das Gegenlaufblech ist mit einem zweiten Lagerteil verbindbar und mit einer Seite dem Trägerelement derart zugewandt angeordnet, dass die erste axiale Dichtlippe, die zweite axiale Dichtlippe und die radiale Dichtlippe mit dem Gegenlaufblech in schleifendem Kontakt sind. Die erste axiale Dichtlippe ist derart ausgelegt, dass sie mit einer ersten Anpresskraft am Gegenlaufblech anliegt. Die zweite axiale Dichtlippe ist derart ausgelegt, dass sie mit einer zweiten Anpresskraft am Gegenlaufblech anliegt. Die radiale Dichtlippe ist derart ausgelegt, dass sie mit einer dritten Anpresskraft am Gegenlaufblech anliegt. Dabei sind die Anpresskräfte in Abhängigkeit eines vorbestimmten Kraftverhältnisses definiert.

Der Vorteil der erfindungsgemäßen Lösung liegt insbesondere darin, dass ein Abheben der Dichtlippen von dem Gegenlaufblech zuverlässig verhindert wird. Das Abheben der Dichtlippen wird für alle Druckverhältnisse, die im Betriebszustand üblicherweise innerhalb der Dichtungsanordnung auftreten können, zuverlässig verhindert. Ferner kann so auch eine Berührung zwischen den beiden axialen Dichtlippen vermieden werden. Das vorbestimmte Kraftverhältnis definiert die Anpresskräfte derart, dass die Anpresskräfte der axialen Dichtlippen ein Austreten des Dichtungsschmiermittels, bspw. Fett, aus einem Dichtungsraum verhindern, und die Anpresskraft der radialen Dichtlippe ein Austreten des Lagerschmiermittels, bspw. Lagerfett, aus dem Lager verhindert. Dadurch kann die erfindungsgemäße Dichtungsanordnung kann auch in sehr geringen Bauräumen zuverlässig eingesetzt werden.

Erfindungsgemäß ist das vorbestimmte Kraftverhältnis durch die nachfolgenden Gleichungen definiert:

$$\text{erste Anpresskraft} = \text{zweite Anpresskraft} \pm 0{,}9 \text{ N} \qquad (1)$$

$$\text{dritte Anpresskraft} = 0{,}5 * (\text{erste Anpresskraft}) \pm 0{,}9 \text{ N} \qquad (2)$$

Die Anpresskräfte der beiden axialen Dichtlippen sind im Wesentlichen gleich. Die Anpresskraft der radialen Dichtlippe ist im Wesentlichen halb so groß wie die Anpresskräfte der axialen Dichtlippen, um eine Reibung zwischen der radialen Dichtlippe und dem Gegenlaufblech zu reduzieren, und so ein Gleiten zwischen der radialen Dichtlippe und dem Gegenlaufblech zu erleichtern, ohne die Dichtleistung zu verringern. Für die Auslegung der Anpresskräfte beträgt ein Toleranzbereich hierbei etwa $\pm$ 0,9 N.

Gemäß einer Ausführungsform ist der Hauptkörper des elastischen Dichtungselements zumindest im Bereich der axialen Dichtlippen in axialer Richtung in einem ersten axialen Abstand zum Gegenlaufblech angeordnet.

Der erste axiale Abstand definiert einen Freiraum, den Dichtungsraum, der zwischen dem Hauptkörper und dem Gegenlaufblech ausgebildet ist, und zur Aufnahme des Dichtungsschmiermittels dient. Ferner erstrecken sich die ersten und zweiten axialen Dichtlippen durch diesen Freiraum bis zum Gegenlaufblech, um ein Austreten des Dichtungsschmiermittels aus dem Freiraum und das Eindringen von Schmutz in den Freiraum zu verhindern. Der erste axiale Abstand wird in Abhängigkeit des vorhandenen Bauraums für die Dichtungsanordnung gewählt, und kann bspw. gleich oder größer als 1,7 mm, alternativ gleich oder größer als 1,95 mm, oder auch gleich oder größer als 2,0 mm sein.

Gemäß einer Ausführungsform weisen die erste axiale Dichtlippe und die zweite axiale Dichtlippe in radialer Richtung am Gegenlaufblech ferner einen ersten radialen Abstand zueinander auf und am Trägerelement einen zweiten radialen Abstand zueinander auf, wobei der erste radiale Abstand und der zweite radiale Abstand in Abhängigkeit von dem ersten axialen Abstand definiert sind.

Die Auslegung des ersten und des zweiten radialen Abstands in Abhängigkeit des ersten axialen Abstands ermöglicht es, dass ein Kontakt zwischen der ersten axialen Dichtlippe und der zweiten axialen Dichtlippe im zusammengebauten sowie im Betriebszustand zuverlässig vermieden wird. Der erste radiale Abstand ist dabei vorzugsweise größer als der zweite radiale Abstand und kann bspw. das 1,24-fache, das 1,15-fache oder das 1,03-fache des ersten axialen Abstands betragen. Der zweite radiale Abstand kann bspw. der Quotient aus dem ersten axialen Abstand als Dividend und 1,27 oder 1,45 oder 1,59 als Divisor betragen. In anderen Worten, der zweite radiale Abstand kann bspw. etwa das 0,787-fache, das 0,69-fache oder das 0,629-fache des ersten axialen Abstands betragen.

Gemäß einer Ausführungsform weist die erste axiale Dichtlippe am Hauptkörper in radialer Richtung eine erste radiale Dicke auf, und die zweite axiale Dichtlippe am Hauptkörper in radialer Richtung einer zweite radiale Dicke auf, wobei die erste radiale Dicke und die zweite radiale Dicke in Abhängigkeit von dem zweiten radialen Abstand definiert sind. Da der zweite radiale Abstand in Abhängigkeit des ersten axialen Abstands definiert ist, können die erste radiale Dicke und die zweite radiale Dicke auch in Abhängigkeit des ersten axialen Abstands definiert sein.

Die Auslegung der ersten und der zweiten radialen Dicke in Abhängigkeit des zweiten radialen Abstands bzw. des ersten axialen Abstands ermöglicht es, dass ein Kontakt zwischen der ersten axialen Dichtlippe und der zweiten axialen Dichtlippe im zusammengebauten sowie im Betriebszustand zuverlässig vermieden wird. Die erste radiale Dicke ist vorzugsweise etwa gleich oder ein wenig kleiner als die zweite radiale Dicke und kann bspw. das 0,50-fache, das 0,40-fache oder das 0,38-fache des zweiten radialen Abstands betragen. Die zweite radiale Dicke kann bspw. das 0,50-fache, das 0,45-fache oder das 0,40-fache des zweiten radialen Abstands betragen.

Gemäß einer bevorzugten Ausführungsform sind die erste axiale Dichtlippe und die zweite axiale Dichtlippe bezogen auf eine Rotationsachse des Radlagers schräg angeordnet, wobei ein Durchmesser der Dichtlippen in axialer Richtung gesehen von dem Hauptkörper zum Gegenlaufblech hin zunimmt.

Eine Schrägstellung der axialen Dichtlippen bezogen auf die Rotationsachse erschwert das Abheben der axialen Dichtlippen von dem Gegenlaufblech im Betriebszustand, wodurch die Dichtleistung der Dichtung für im Betrieb üblicherweise auftretende Druckverhältnisse gewährleistet ist. Darüber hinaus wird durch die Schrägstellung der axialen Dichtlippen eine Berührung der Dichtlippen im abdichtenden Zustand, insbesondere in sehr kleinen Bauraumverhältnissen, vermieden.

Erfindungsgemäß ist hierbei eine Innenumfangsfläche der ersten axialen Dichtlippe mit einem ersten Innenumfangsflächenwinkel zur Rotationsachse angeordnet und eine Außenumfangsfläche der ersten axialen Dichtlippe ist mit einem ersten Außenumfangsflächenwinkel zur Rotationsachse angeordnet, wobei der erste Außenumfangsflächenwinkel in Abhängigkeit von dem ersten Innenumfangsflächenwinkel definiert ist.

Erfindungsgemäß ist eine Innenumfangsfläche der zweiten axialen Dichtlippe mit einem zweiten Innenumfangsflächenwinkel zur Rotationsachse angeordnet und eine Außenumfangsfläche der zweiten axialen Dichtlippe ist mit einem zweiten Außenumfangsflächenwinkel zur Rotationsachse angeordnet, wobei der zweite Außenumfangsflächenwinkel in Abhängigkeit von dem zweiten Innenumfangsflächenwinkel definiert ist.

Das bedeutet, dass sich eine Dicke der axialen Dichtlippen von dem Trägerelement ausgehend bis hin zum Gegenlaufblech verändert. Dies unterstützt bzw. verstärkt den Effekt, eine Berührung zwischen den beiden axialen Dichtlippen zu vermeiden, der durch die Schrägstellung der beiden axialen Dichtlippen bezogen auf die Rotationsachse bereits erzielt wird. Wenn sich die beiden axialen Dichtlippen berühren, kann ein Austreten des Dichtungsschmiermittels aus dem Dichtungsraum nicht mehr zuverlässig verhindert werden. Daher muss eine Berührung zwischen den beiden axialen Dichtlippen vermieden werden. Wenn der erste Innenumfangsflächenwinkel bspw. zwischen 25° und 28° beträgt, ist der erste Außenumfangsflächenwinkel bspw. um 4,7° größer als der erste Innenumfangsflächenwinkel, mit einer Toleranz von ±1°. Ferner kann der erste Innenumfangsflächenwinkel bspw. zwischen 33° und 36° betragen. Dann ist der erste Außenumfangsflächenwinkel bspw. um 0,553° bis 0,58° kleiner als der erste Innenumfangsflächenwinkel, mit einer Toleranz von ±1°.

Wenn der zweite Innenumfangsflächenwinkel bspw. zwischen 30° und 33° beträgt, ist der zweite Außenumfangsflächenwinkel bspw. um 5,1° größer als der zweite Innenumfangsflächenwinkel, mit einer Toleranz von ±1°. Ferner kann der zweite Innenumfangsflächenwinkel bspw. zwischen 36° und 39° betragen. Dann ist der zweite Außenumfangsflächenwinkel bspw. um 0,335° bis 0,352° kleiner als der zweite Innenumfangsflächenwinkel, mit einer Toleranz von ±1°.

Gemäß einer Ausführungsform ist ferner eine dritte axiale Dichtlippe vorgesehen, die als eine Vordichtung dient. Die Vordichtung erstreckt sich nicht bis zum Gegenlaufblech und erzeugt ein Fanglabyrinth, das dazu eingerichtet ist, eindringende Feststoffpartikel direkt wieder nach außen abzuführen und dadurch die axialen Dichtlippen vor Schmutz bzw. Schmutzwasser zu schützen.

Weitere Aspekte der Erfindung betreffen die Verwendung einer vorstehend beschriebenen Dichtungsanordnung zur Dichtung eines Radlagers sowie eine Radlagereinheit für ein Kraftfahrzeug, mit einem Radlager und einer vorstehend beschriebenen Dichtungsanordnung.

Detailbeschreibung anhand Zeichnung

Weitere die Erfindung verbessernde Maßnahmen werden nachstehend gemeinsam mit der Beschreibung eines bevorzugten Ausführungsbeispiels der Erfindung anhand der Figuren näher dargestellt. Es zeigt:

Fig. 1    eine schematische Längsschnittdarstellung einer radflanschseitigen Dichtungsanordnung gemäß einer Ausführungsform der Erfindung.

Fig. 2    eine schematische Längsschnittdarstellung einer fahrzeugseitigen Dichtungsanordnung gemäß einer Ausführungsform der Erfindung.

Fig. 3    eine schematische Längsschnittdarstellung einer radflanschseitigen Dichtungsanordnung gemäß einer weiteren Ausführungsform der Erfindung.

Die Figuren sind lediglich schematischer Natur und dienen nur dem Verständnis der Erfindung. Gleiche Elemente sind mit denselben Bezugzeichen versehen.

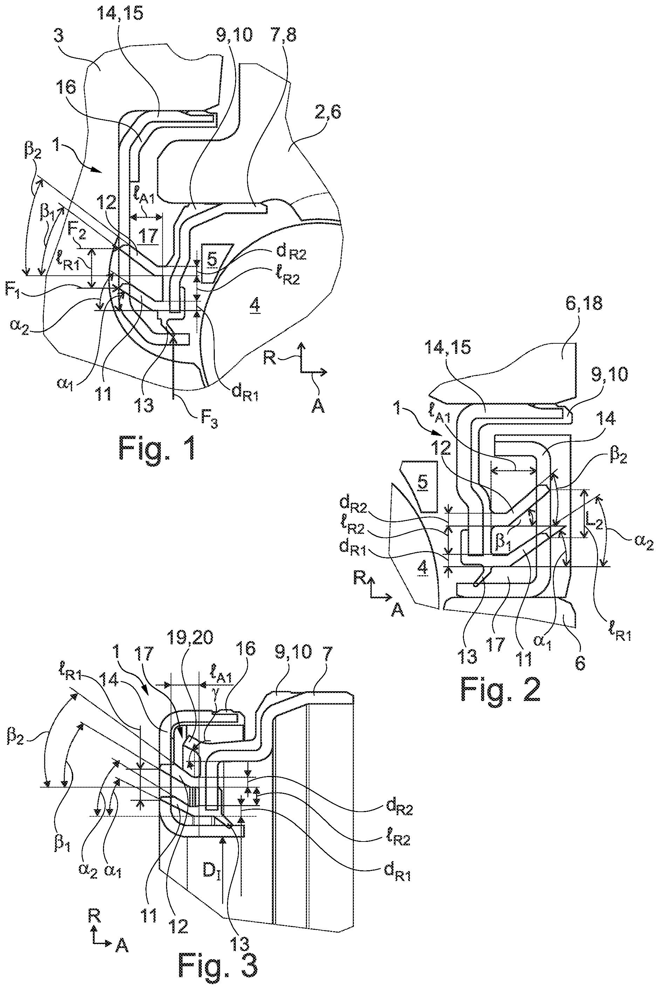

Fig. 1 zeigt eine Dichtungsanordnung 1, die in axialer Richtung A zwischen einem Radlager 2 und einem Radlagerflansch 3 angeordnet ist, wobei sowohl das Radlager 2 als auch der Radlagerflansch 3 nur ausschnittweise dargestellt sind. Das Radlager 2 ist als ein Wälzlager mit Wälzkörpern 4 ausgebildet, die von einem Käfig 5 in Wälzlaufbahnen von die Wälzkörper 4 einfassenden Lagerringe 6.

Die Dichtungsanordnung 1 besitzt ein Trägerelement 7, das an mit einem Befestigungsabschnitt 8 an einem der Langerringe 6 festgelegt ist. An dem Trägerelement 7 ist ein elastisches Dichtungselement 9 angeordnet, das einen elastischen Hauptkörper 10 aufweist, von dem sich eine erste axiale Dichtlippe 11, eine zweite axiale Dichtlippe 12 und eine radiale Dichtlippe 13 weg erstrecken. Ferner besitzt die Dichtungsanordnung 1 ein Gegenlaufblech 14, das dem Trägerelement 7 derart zugewandt angeordnet ist, dass es mit den axialen Dichtlippen 11, 12 und der radialen Dichtlippe 13 in schleifendem Kontakt ist. Das Gegenlaufblech 14 ist mit einem Befestigungsabschnitt 15 an dem integral mit dem anderen der Lagerringe 6 (hier nicht dargestellt) ausgebildeten Radlagerflansch 3 festgelegt. Darüber hinaus ist an dem Gegenlaufblech 14 im Bereich des Befestigungsabschnitts 15 ein elastisches Dichtungselement 16 angeordnet, das eine Kopplungsstelle zwischen dem Befestigungabschnitt 15 und dem Radlagerflansch 3 abdichtet.

Der schleifende Kontakt wird durch die überlappende Darstellung der Dichtlippen 11, 12, 13 mit dem Gegenlaufblech 14 bildhaft verdeutlicht. In der Praxis überlappen sich die Dichtlippen 11, 12, 13 nicht mit dem Gegenblech 14, sondern liegen derart an dem Gegenlaufblech 14 an, dass sich bei einer Rotationsbewegung des Radlagerflanschs 3 - und somit den Gegenlaufblechs 14 - ein schleifender Kontakt zwischen den Dichtlippen 11, 12, 13 und dem Gegenlaufblech 14 ausbildet. Der schleifende Kontakt ist für jede der Dichtlippen 11, 12, 13 individuell und wird dadurch definiert, dass die Dichtlippen 11, 12, 13 jeweils mit einer vorbestimmten Anpresskraft F an dem Gegenlaufblech 14 anliegen.

Dabei liegen die erste axiale Dichtlippe 11 mit einer ersten Anpresskraft $F_1$ und die zweite axiale Dichtlippe 12 mit einer zweiten Anpresskraft $F_2$ an dem Gegenlaufblech 14 an. Die radiale Dichtlippe 13 liegt mit einer dritten Anpresskraft $F_3$ an dem Gegenlaufblech 14 an, wobei die erste und die zweite Anpresskraft $F_1$, $F_2$ in axialer Richtung A aufgebracht sind und die dritte Anpresskraft $F_3$ in radialer Richtung R aufgebracht ist.

**Die Anpresskräfte** $F_1$, $F_2$ und $F_3$ stehen in einem vorbestimmten Kraftverhältnis zueinander, das die Anpresskräfte $F_1$, $F_2$, $F_3$ in Abhängigkeit voneinander wie folgt definiert:

$$F_1 = F_2 \pm 0{,}9 \text{ N} \qquad (1) \qquad \text{und} \qquad F_3 = 0{,}5 * F_1 \pm 0{,}9 \text{ N} \qquad (2)$$

**Die Angabe** $\pm$ 0,9 N gibt einen Toleranzbereich für die Berechnung der Kräfte an.

Das Gegenlaufblech 14 ist in axialer Richtung A mit einem ersten axialen Abstand $l_{A1}$ beabstandet zu dem Trägerelement 7 mit dem elastischen Hauptkörper 10 angeordnet, so dass ein Freiraum, also ein Dichtungsraum 17 ausgebildet ist. Die axialen Dichtlippen 11, 12 erstrecken sich im Wesentlichen in axialer Richtung A schräg durch den Dichtungsraum 17 bis zum Gegenlaufblech 14 und sind in radialer Richtung R zueinander beabstandet ausgebildet, wobei die erste axiale Dichtlippe 11 in radialer Richtung R gesehen weiter innen angeordnet ist als die zweite axiale Dichtlippe 12.

Der Abstand zwischen den beiden axialen Dichtlippen 11, 12 ist über ihre Erstreckungslänge nicht konstant, das heißt, ein erster radialer Abstand $l_{R1}$ zwischen der ersten axialen Dichtlippe 11 und der zweiten axialen Dichtlippe 12 am Gegenlaufblech 14 unterscheidet sich von einem zweiten radialen Abstand $l_{R2}$ zwischen der ersten axialen Dichtlippe 11 und der zweiten axialen Dichtlippe 12 am Trägerelement 7. Sowohl der erste radiale Abstand $l_{R1}$ als auch der zweite radiale Abstand $l_{R2}$ sind in Abhängigkeit von dem ersten axialen Abstand $l_{A1}$ definiert. In der in dieser Figur dargestellten Ausführungsform ist der erste axiale Abstand $l_{A1}$ bspw. größer gleich 1,7 mm und der erste radiale Abstand $l_{R1}$ und der zweite radiale Abstand $l_{R2}$ sind bspw. wie folgt definiert:

$$l_{R1} = l_{A1} * 1{,}24 \quad (3) \qquad \text{und} \qquad l_{R2} = l_{A1} / 1{,}27 \quad (4).$$

Darüber hinaus sind besitzt die erste axiale Dichtlippe 11 am Trägerelement 7 eine erste radiale Dicke $d_{R1}$, und die zweite axiale Dichtlippe 12 besitzt am Trägerelement 7 eine zweite radiale Dicke $d_{R2}$. Die beiden radialen Dicken $d_{R1}$, $d_{R2}$ sind wiederum in Abhängigkeit vom dem zweiten radialen Abstand $l_{R2}$ definiert und sind somit auch abhängig von dem ersten axialen Abstand $l_{A1}$ definiert:

$$d_{R1} = l_{R2} * 0{,}38 = (l_{A1} / 1{,}27) * 0{,}38 \quad (5), \qquad \text{und} \qquad d_{R2} = l_{R2} * 0{,}4 = (l_{A1} / 1{,}27) * 0{,}4 \qquad (6).$$

Ferner verändert sich auch eine Dicke der axialen Dichtlippen 11, 12 über ihre Erstreckungsrichtung. Diese Dickenänderung wird durch ein Verhältnis zwischen einem Innenumfangsflächenwinkel und einem Außenumfangsflächenwinkel der jeweiligen axialen Dichtlippe 11, 12 angegeben. Als Innenumfangsflächenwinkel wird hierbei ein Winkel zwischen einer Innenumfangsfläche der jeweiligen axialen Dichtlippe 11, 12, und einer Rotationsachse (nicht dargestellt) der Dichtungsanordnung 1 bezeichnet und als Außenumfangsflächenwinkel wird ein Winkel zwischen einer Außenumfangsfläche der jeweiligen axialen Dichtlippe 11, 12 und der Rotationsachse der Dichtungsanordnung 1 bezeichnet. Dabei ist der Außenumfangsflächenwinkel abhängig von dem Innenumfangsflächenwinkel.

So beträgt in der in Fig. 1 gezeigten Ausführungsform ein erster Innenumfangsflächenwinkel $\alpha_1$ der ersten axialen Dichtlippe 11 zwischen 33° und 36°. Ein zweiter Innenumfangsflächenwinkel $\beta_1$ der zweiten axialen Dichtlippe 12 beträgt zwischen 36° und 39°. Ein erster Außenumfangsflächenwinkel $\alpha_2$ bzw. ein zweiter Außenumfangsflächenwinkel $\beta_2$ sind dann wie folgt definiert:

$$\alpha_2 = (\alpha_1 - 0{,}553°) \pm 1° \qquad (7) \qquad \text{bzw.} \qquad \beta_2 = (\beta_1 - 0{,}342°) \pm 1° \qquad (8)$$

Die Angabe $\pm$ 1° gibt einen Toleranzbereich für die Auslegung der Winkel an.

Es ist also zu erkennen, dass die Dichtungsanordnung 1 zum einen über die Anpresskräfte der Dichtlippen 11, 12, 13 an dem Gegenlaufblech 14 und zum anderen in Abhängigkeit vom dem ersten axialen Abstand $l_{A1}$ ausgelegt wird. Der erste axiale Abstand $l_{A1}$ steht in direktem Zusammenhang mit dem für die Dichtungsanordnung 1 verfügbaren Bauraum. Das bedeutet, die Dichtungsanordnung 1 wird im Wesentlichen in Abhängigkeit der verfügbaren Bauraumgröße und der notwendigen ersten Anpresskraft $F_1$ ausgelegt.

Fig. 2 zeigt die Dichtungsanordnung 1, die in axialer Richtung A zwischen einem Radlager 2 und einer Karosserie 18 angeordnet ist, wobei sowohl das Radlager 2 als auch die Karosserie 18 nur ausschnittweise dargestellt sind. Der Aufbau der Dichtungsanordnung 1 ist dem der in Fig. 1 gezeigten Ausführungsform sehr ähnlich, weshalb nachfolgend nur auf die Unterschiede eingegangen wird. Aufgrund einer anderen Einbauposition der Dichtungsanordnung 1, die im Vergleich zu Fig. 1 spiegelverkehrt angeordnet ist, ist der erste axiale Abstand $l_{A1}$ gleich oder größer 1,95 mm. Damit ergeben sich für die hier gezeigte Ausführungsform folgende Längen- und Winkelverhältnisse:

$$l_{R1} = l_{A1} * 1{,}03$$

$$l_{R2} = l_{A1} / 1{,}59$$

$$d_{R1} = l_{R2} * 0{,}40 = (l_{A1} / 1{,}59) * 0{,}40$$

$$d_{R2} = l_{R2} * 0{,}45 = (l_{A1} / 1{,}59) * 0{,}45$$

$$\alpha_1 = 33° \text{ bis } 36° \text{ und } \alpha_2 = (\alpha_1 - 0{,}58°) \pm 1°$$

$$\beta_1 = 36° \text{ bis } 39° \text{ und } \beta_2 = (\beta_1 - 0{,}335°) \pm 1°$$

Das Kraftverhältnis der Anpresskräfte $F_1$, $F_2$ und $F_3$ entspricht dem in Bezug auf Fig. 1 beschriebenen Kraftverhältnis.

Fig. 3 zeigt eine weitere Ausführungsform der Dichtungsanordnung 1 gemäß der Erfindung. Es ist zu erkennen, dass das Trägerelement 7 leicht anders ausgebildet ist und die Dichtungsanordnung 1 allein, ohne Bezug zu angrenzenden Elementen, dargestellt ist. Auch in dieser Ausführungsform entspricht das Kraftverhältnis der Anpresskräfte $F_1$, $F_2$ und $F_3$ entspricht dem in Bezug auf Fig. 1 beschriebenen Kraftverhältnis.

In der hier gezeigten Ausführungsform ist der erste axiale Abstand $l_{A1}$ gleich oder größer als 2 mm. Daraus ergeben sich folgende Längen- und Winkelverhältnisse:

$$l_{R1} = l_{A1} * 1{,}15$$

$$l_{R2} = l_{A1} / 1{,}45$$

$$d_{R1} = l_{R2} * 0{,}50 = (l_{A1} / 1{,}45) * 0{,}50$$

$$d_{R2} = l_{R2} * 0{,}50 = (l_{A1} / 1{,}45) * 0{,}50$$

$$\alpha_1 = 25° \text{ bis } 28° \text{ und } \alpha_2 = (\alpha_1 + 4{,}7°) \pm 1°$$

$$\beta_1 = 30° \text{ bis } 33° \text{ und } \beta_2 = (\beta_1 + 5{,}1°) \pm 1°$$

Zusätzlich weist die hier gezeigte Dichtungsanordnung 1 ferner eine dritte axiale Dichtlippe 19 auf, die als sich nicht bis zum Gegenlaufblech 14 hin erstreckt und in radialer Richtung R betrachtet außerhalb der zweiten axialen Dichtlippe 12 angeordnet ist. Die dritte axiale Dichtlippe 19 dient als eine Vordichtung 20 und bildet in dem Dichtungsraum 17 ein Fanglabyrinth aus, welches von außen eindringende Partikel, wie Schmutz, Schmutzwasser, Staub etc., direkt wieder nach außen abführen soll. Hierzu ist die dritte axiale Dichtlippe 19 bezogen auf die Rotationsachse der Dichtungsanordnung 1 in einem Winkel $\gamma$ schräg nach außen angeordnet, wobei der Winkel $\gamma$ hier beispielhaft etwa 30° beträgt. Durch die Vordichtung 20 sollen die erste und die zweite axiale Dichtlippe 11, 12 vor den eindringenden Partikeln geschützt werden, wodurch sich die Lebensdauer der Dichtungsanordnung 1 weiter erhöhen kann.

Darüber hinaus ist in Fig.3 ein Innendurchmesser $D_I$ des Gegenlaufblechs 14 angegeben, der hier beispielhaft 80 mm beträgt.

**Bezugszeichenliste**

| | |
|---|---|
| 1 | Dichtungsanordnung |
| 2 | Radlager |
| 3 | Radlagerflansch |
| 4 | Wälzkörper |
| 5 | Käfig |
| 6 | Lagerring |
| 7 | Trägerelement |
| 8 | Befestigungsabschnitt |
| 9 | elastisches Dichtungselement |
| 10 | elastischer Hauptkörper |
| 11 | erste axiale Dichtlippe |
| 12 | zweite axiale Dichtlippe |
| 13 | radiale Dichtlippe |
| 14 | Gegenlaufblech |
| 15 | Befestigungsabschnitt |
| 16 | Dichtungselement |
| 17 | Dichtungsraum |
| 18 | Karosserie |
| 19 | dritte axiale Dichtlippe |
| 20 | Vordichtung |

| | |
|---|---|
| $F, F_1, F_2, F_3$ | Anpresskraft |
| $I_{A1}$ | axialer Abstand |
| $I_{R1}, I_{R2}$ | radialer Abstand |
| $d_{R1}, d_{R2}$ | radiale Dicke |
| $D_I$ | Innendurchmesser |
| $\alpha_1, \beta_1$ | Innenumfangsflächenwinkel |
| $\alpha_2, \beta_2$ | Außenumfangsflächenwinkel |
| $\gamma$ | Winkel |

| | |
|---|---|
| R | radiale Richtung |
| A | axiale Richtung |

**Patentansprüche**

1. Dichtungsanordnung (1) für ein Radlager (2), aufweisend:

   ein Trägerelement (7), das mit einem ersten Lagerteil (6) des Radlagers (2) verbindbar ist;
   ein elastisches Dichtungselement (9), das einen elastischen Hauptkörper (10) aufweist, der an dem Trägerelement (7) angeordnet ist, wobei das elastische Dichtungselement (9) ferner zumindest eine erste axiale Dichtlippe (11) und eine zweite axiale Dichtlippe (12) und zumindest eine radiale Dichtlippe (13) aufweist, die sich von dem Hauptkörper (10) weg erstrecken, wobei eine Innenumfangsfläche der ersten axialen Dichtlippe (11) mit einem ersten Innenumfangsflächenwinkel ($\alpha_1$) zur Rotationsachse angeordnet ist und eine Außenumfangsfläche der ersten axialen Dichtlippe (11) mit einem ersten Außenumfangsflächenwinkel ($\alpha_2$) zur Rotationsachse angeordnet ist, wobei der erste Außenumfangsflächenwinkel ($\alpha_2$) in Abhängigkeit von dem ersten Innenumfangsflächenwinkel ($\alpha_3$) definiert ist, und wobei eine Innenumfangsfläche der zweiten axialen Dichtlippe (12) mit einem zweiten Innenumfangsflächenwinkel ($\beta_1$) zur Rotationsachse angeordnet ist und eine Außenumfangsfläche der zweiten axialen Dichtlippe (12) mit einem zweiten Außenumfangsflächenwinkel ($\beta_2$) zur Rotationsachse angeordnet ist, wobei der zweite Außenumfangsflächenwinkel ($\beta_2$) in Abhängigkeit von dem zweiten Innenumfangsflächenwinkel ($\beta_3$) definiert ist, und
   ein Gegenlaufblech (14), das mit einem zweiten Lagerteil (6) verbindbar ist, und mit einer Seite dem Trägerelement (7) derart zugewandt angeordnet ist, dass die erste axiale Dichtlippe (11), die zweite axiale Dichtlippe (12) und die radiale Dichtlippe (13) mit dem Gegenlaufblech (14) in schleifendem Kontakt sind, wobei

   die erste axiale Dichtlippe (11) derart ausgelegt ist, dass sie mit einer ersten Anpresskraft ($F_1$) am Gegenlaufblech (14) anliegt,
   die zweite axiale Dichtlippe (12) derart ausgelegt ist, dass sie mit einer zweiten Anpresskraft ($F_2$) am Gegenlaufblech (14) anliegt, und

die radiale Dichtlippe (13) derart ausgelegt ist, dass sie mit einer dritten Anpresskraft ($F_3$) am Gegenlaufblech (14) anliegt,

**wobei** die Anpresskräfte ($F_1$; $F_2$; $F_3$) in Abhängigkeit eines vorbestimmten Kraftverhältnisses definiert sind, **dadurch gekennzeichnet, dass** das vorbestimmte Kraftverhältnis durch die nachfolgenden Gleichungen definiert ist:

$$\text{erste Anpresskraft } (F_1) = \text{zweite Anpresskraft } (F_2) \pm 0{,}9 \text{ N} \qquad (1)$$

$$\text{dritte Anpresskraft } (F_3) = 0{,}5*(\text{erste Anpresskraft } (F_1)) \pm 0{,}9 \text{ N} \qquad (2)$$

2. Dichtungsanordnung (1) nach Anspruch 1, wobei der erste Innenumfangsflächenwinkel ($\alpha_1$) in einem Bereich zwischen 25° und 28° liegt, der erste Außenumfangsflächenwinkel ($\alpha_2$) entsprechend $\alpha_2=(\alpha_1+4{,}7°)\pm1°$ beträgt, und der zweite Innenumfangsflächenwinkel ($\beta_1$) in einem Bereich zwischen 30° und 33° liegt und der zweite Außenumfangsflächenwinkel ($\beta_2$) entsprechend $\beta_2=(\beta_1+5{,}1°)\pm1°$ beträgt.

3. Dichtungsanordnung (1) nach Anspruch 1 oder 2, wobei der Hauptkörper (10) des elastischen Dichtungselements (9) zumindest im Bereich der axialen Dichtlippen (11, 12) in axialer Richtung (A) in einem ersten axialen Abstand ($I_{A1}$) zum Gegenlaufblech (14) angeordnet ist.

4. Dichtungsanordnung (1) nach Anspruch 3, wobei die erste axiale Dichtlippe (11) und die zweite axiale Dichtlippe (12) in radialer Richtung (R) am Gegenlaufblech (14) einen ersten radialen Abstand ($I_{R1}$) zueinander aufweisen und am Trägerelement (7) einen zweiten radialen Abstand ($I_{R2}$) zueinander aufweisen, wobei der erste radiale Abstand ($I_{R1}$) und der zweite radiale Abstand ($I_{R2}$) in Abhängigkeit von dem ersten axialen Abstand ($I_{A1}$) definiert sind.

5. Dichtungsanordnung (1) nach Anspruch 4, wobei die erste axiale Dichtlippe (11) am Hauptkörper (10) in radialer Richtung (R) eine erste radiale Dicke ($d_{R1}$) aufweist, und die zweite axiale Dichtlippe (12) am Hauptkörper (10) in radialer Richtung (R) einer zweite radiale Dicke ($d_{R2}$) aufweist, wobei die erste radiale Dicke ($d_{R1}$) und die zweite radiale Dicke ($d_{R2}$) in Abhängigkeit von dem zweiten radialen Abstand ($I_{R2}$) definiert sind.

6. Dichtungsanordnung (1) nach einem der Ansprüche 1 bis 5, wobei die erste axiale Dichtlippe (11) und die zweite axiale Dichtlippe (12) bezogen auf eine Rotationsachse des Radlagers (2) schräg angeordnet sind, wobei ein Durchmesser der axialen Dichtlippen (11, 12,) in axialer Richtung (A) gesehen von dem Hauptkörper (10) zum Gegenlaufblech (14) hin zunimmt.

7. Verwendung einer Dichtungsanordnung (1) nach einem der Ansprüche 1 bis 6 zur Dichtung eines Radlagers (2).

8. Radlagereinheit für ein Kraftfahrzeug, aufweisend:

ein Radlager (2), das als ein Wälzlager ausgebildet ist, und
eine Dichtungsanordnung (1) nach einem der Ansprüche 1 bis 6, die zumindest auf einer axialen Seite des Radlagers (2) angrenzend angeordnet ist.

**Claims**

1. A sealing arrangement (1) for a wheel bearing (2), comprising:

a carrier element (7) which can be connected to a first bearing part (6) of the wheel bearing (2);
an elastic sealing element (9) having an elastic main body (10) arranged on the carrier element (7), wherein the elastic sealing element (9) further comprises at least a first axial sealing lip (11) and a second axial sealing lip (12) and at least one radial sealing lip (13) extending away from the main body (10), wherein an inner circumferential surface of the first axial sealing lip (11) is arranged at a first inner circumferential surface angle ($\alpha_3$) to the axis of rotation and an outer circumferential surface of the first axial sealing lip (11) is arranged at a first outer circumferential surface angle ($\alpha_2$) to the axis of rotation, wherein the first outer circumferential surface angle ($\alpha_2$) is defined as a function of the first inner circumferential surface angle ($\alpha_1$), and wherein an inner circumferential surface of the second axial sealing lip (12) is arranged at a second inner circumferential surface angle ($\beta_1$) to the axis of rotation and an outer circumferential surface of the second axial sealing lip (12) is arranged at a second outer circumferential surface angle ($\beta_2$) to the axis of rotation, wherein the second outer circumferential surface angle ($\beta_2$) is defined as a function of the second inner circumferential surface angle ($\beta_1$), and a counterplate (14) which can be connected to a second bearing part (6) and is arranged with one side facing the carrier element (7) such that the first axial sealing lip (11), the second axial sealing lip (12) and the radial sealing lip (13) are in grinding contact with the counterplate (14), wherein

the first axial sealing lip (11) is designed such that it rests against the counterplate (14) with a first contact force ($F_1$),

the second axial sealing lip (12) is designed such that it rests against the counterplate (14) with a second contact force ($F_2$), and

the radial sealing lip (13) is designed such that it rests against the counterplate (14) with a third contact force ($F_3$), **wherein** the contact forces ($F_1$; $F_2$; $F_3$) are defined as a function of a predetermined force ratio, **characterised in that** the predetermined force ratio is defined by the following equations:

$$\text{first contact force } (F_1) = \text{second contact force } (F_2) \pm 0.9 \text{ N} \tag{1}$$

$$\text{third contact force } (F_3) = 0.5*(\text{first contact force } (F_1)) \pm 0.9 \text{ N} \tag{2}$$

2. The sealing arrangement (1) according to claim 1, wherein the first inner circumferential surface angle ($\alpha_3$) is in a range between 25° and 28°, the first outer circumferential surface angle ($\alpha_2$) is equivalent to $\alpha_2=(\alpha_1 4.7°)\pm1°$, and the second inner circumferential surface angle ($\beta_1$) is in a range between 30° and 33° and the second outer circumferential surface angle ($\beta_2$) is equivalent to $\beta_2=(\beta_1 5.1°)\pm1°$.

3. The sealing arrangement (1) according to claim 1 or 2, wherein the main body (10) of the elastic sealing element (9) is arranged at least in the region of the axial sealing lips (11, 12) in the axial direction (A) at a first axial distance ($I_{A1}$) from the counterplate (14).

4. The sealing arrangement (1) according to claim 3, wherein the first axial sealing lip (11) and the second axial sealing lip (12) in the radial direction have a first radial distance ($I_{R1}$) to each other on the counterplate (14) and a second radial distance ($I_{R2}$) to each other on the carrier element (7), wherein the first radial distance ($I_{R1}$) and the second radial distance ($I_{R2}$) are defined as a function of the first axial distance ($I_{A1}$).

5. The sealing arrangement (1) according to claim 4, wherein the first axial sealing lip (11) on the main body (10) in the radial direction (R) has a first radial thickness ($d_{R1}$), and the second axial sealing lip (12) on the main body (10) in the radial direction (R) has a second radial thickness ($d_{R2}$), wherein the first radial thickness ($d_{R1}$) and the second radial thickness ($d_{R2}$) are defined as a function of the second radial distance ($I_{R2}$).

6. The sealing arrangement (1) according to one of claims 1 to 5, wherein the first axial sealing lip (11) and the second axial sealing lip (12) are arranged obliquely with respect to an axis of rotation of the wheel bearing (2), wherein a diameter of the axial sealing lips (11, 12) increases in the axial direction (A) when viewed from the main body (10) to the counterplate (14).

7. Use of a sealing arrangement (1) according to one of claims 1 to 6 for sealing a wheel bearing (2).

8. A wheel bearing unit for a motor vehicle, comprising:

a wheel bearing (2) which is designed as a roller bearing, and
a sealing arrangement (1) according to one of claims 1 to 6, which is arranged adjacent at least to one axial side of the wheel bearing (2).

**Revendications**

1. Agencement d'étanchéité (1) pour un roulement de roue (2), comportant :

un élément porteur (7), lequel peut être relié à une première partie de roulement (6) du roulement de roue (2) ;
un élément d'étanchéité (9) souple, lequel comporte un corps principal (10) souple, lequel est agencé sur l'élément porteur (7), dans lequel l'élément d'étanchéité (9) souple comporte en outre au moins une première lèvre d'étanchéité (11) axiale et une seconde lèvre d'étanchéité (12) axiale et au moins une lèvre d'étanchéité (13) radiale, laquelle s'étendent à l'opposé du corps principal (10), dans lequel une surface circonférentielle interne de la première lèvre d'étanchéité (11) axiale est agencée par rapport à l'axe de rotation à un premier angle de surface circonférentielle interne ($\alpha_1$) et une surface circonférentielle externe de la première lèvre d'étanchéité (11) axiale est agencée par rapport à l'axe de rotation à un premier angle de surface circonférentielle externe ($\alpha_2$), dans lequel le premier angle de surface circonférentielle externe ($\alpha_2$) est défini en fonction du premier angle de surface circonférentielle interne ($\alpha_1$), et dans lequel une surface circonférentielle interne de la seconde lèvre d'étanchéité (12) axiale est agencée par rapport à l'axe de rotation à un second angle de surface circonférentielle interne ($\beta_1$) et une surface circonférentielle externe de la seconde lèvre d'étanchéité (12) axiale est agencée par rapport à l'axe de rotation à un second angle de surface circonférentielle externe ($\beta_2$), dans lequel le second angle de surface circonférentielle externe ($\beta_2$) est défini en fonction du second angle de surface circonférentielle interne ($\beta_1$), et une tôle antagoniste (14), laquelle peut être reliée à une seconde partie de roulement (6), et laquelle est agencée avec un côté tourné vers l'élément porteur (7) de telle sorte que la première lèvre d'étanchéité (11) axiale, la seconde lèvre d'étanchéité (12) axiale et la lèvre d'étanchéité (13) radiale sont en contact par frottement avec la tôle antagoniste (14), dans lequel

la première lèvre d'étanchéité (11) axiale est conçue de telle sorte qu'elle s'appuie sur la tôle antagoniste (14) avec une première force de contact ($F_1$),

la seconde lèvre d'étanchéité (12) axiale est conçue de telle sorte qu'elle s'appuie sur la tôle antagoniste (14) avec une deuxième force de contact ($F_2$), et

la lèvre d'étanchéité (13) radiale est conçue de telle sorte qu'elle s'appuie sur la tôle antagoniste (14) avec une troisième force de contact ($F_3$),

**dans** lequel les forces de contact ($F_1$ ; $F_2$ ; $F_3$) sont définies en fonction d'un rapport de forces prédéterminé, **caractérisé en ce que** le rapport de forces prédéterminé est défini par les équations suivantes :

$$\text{première force de contact } (F_1) = \text{deuxième force de contact } (F_2) \pm 0{,}9 \, \text{N} \qquad (1)$$

$$\text{troisième force de contact } (F_3) = 0{,}5 * (\text{première force de contact } (F_1)) \pm 0{,}9 \, \text{N} \qquad (2)$$

2. Agencement d'étanchéité (1) selon la revendication 1, dans lequel le premier angle de surface circonférentielle interne ($\alpha_1$) se trouve dans une plage comprise entre 25 ° et 28 °, le premier angle de surface circonférentielle externe ($\alpha_2$) est de manière correspondante $\alpha_2 = (\alpha_1 + 4{,}7\,°) \pm 1\,°$, et le second angle de surface circonférentielle interne ($\beta_1$) se trouve dans une plage comprise entre 30 ° et 33 ° et le seconde angle de surface circonférentielle externe ($\beta_2$) est de manière correspondante $\beta_2 = (\beta_1 + 5{,}1\,°) \pm 1\,°$.

3. Agencement d'étanchéité (1) selon la revendication 1 ou 2, dans lequel le corps principal (10) de l'élément d'étanchéité (9) souple, au moins dans la zone des lèvres d'étanchéité (11, 12) axiales, est agencé dans la direction axiale (A) à une première distance axiale ($I_{A1}$) de la tôle antagoniste (14).

4. Agencement d'étanchéité (1) selon la revendication 3, dans lequel la première lèvre d'étanchéité (11) axiale et la seconde lèvre d'étanchéité (12) axiale présente dans la direction radiale (R) une première distance radiale ($I_{R1}$) l'une par rapport à l'autre sur la tôle antagoniste (14) et une seconde distance radiale ($I_{R2}$) l'une par rapport à l'autre sur l'élément porteur (7), dans lequel la première distance radiale ($I_{R1}$) et la seconde distance radiale ($I_{R2}$) sont définies en fonction de la première distance axiale ($I_{A1}$).

5. Agencement d'étanchéité (1) selon la revendication 4, dans lequel la première lèvre d'étanchéité (11) axiale sur le corps principal (10) présente, dans la direction radiale (R), une première épaisseur radiale ($d_{r1}$), et la seconde lèvre d'étanchéité (12) axiale sur le corps principal (10) présente, dans la direction radiale (R), une seconde épaisseur radiale ($d_{R2}$), dans lequel la première épaisseur radiale ($d_{R1}$) et la seconde épaisseur radiale ($d_{R2}$) sont définies en fonction de la seconde distance radiale ($I_{R2}$).

6. Agencement d'étanchéité (1) selon l'une quelconque des revendications 1 à 5, dans lequel la première lèvre d'étanchéité (11) axiale et la seconde lèvre d'étanchéité (12) axiale sont agencées obliquement par rapport à un axe de rotation du roulement de roue (2), dans lequel un diamètre des lèvres d'étanchéité (11, 12) axiales, vu dans la direction axiale (A), augmente depuis le corps principal (10) vers la tôle antagoniste (14).

7. Utilisation d'un agencement d'étanchéité (1) selon l'une quelconque des revendications 1 à 6 pour **l'étanchéité** d'un roulement de roue (2).

8. Unité de roulement de roue pour un véhicule automobile, comportant :

un roulement de roue (2) conçu sous la forme d'un roulement à rouleaux, et
un agencement d'étanchéité (1) selon l'une quelconque des revendications 1 à 6, lequel est agencé adjacent au moins sur un côté axial du roulement de roue (2).

Fig. 1

Fig. 2

Fig. 3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 112010000730 T5